# EUROPEAN PATENT APPLICATION

(11) **EP 3 761 483 A1**
(43) Date of publication of application: **06.01.2021**
(21) Application number: 18911518.1
(22) Date of filing: 16.11.2018
(51) Int. Cl.: H02K 1/16, H02K 1/27, H02K 21/14

(54) **MOTOR, COMPRESSOR, AND REFRIGERATION DEVICE**

(30) Priority: 29.03.2018 CN 201810273584
(71) Applicant: Guangdong Meizhi Compressor Co., Ltd., Foshan, Guangdong 528311 (CN)
(72) Inventor: QIU, Xiaohua, Foshan, Guangdong 528311 (CN); ZHAO, Dongliang, Foshan, Guangdong 528311 (CN); WANG, Zhengxiang, Foshan, Guangdong 528311 (CN); ZHANG, Hemao, Foshan, Guangdong 528311 (CN)
(74) Representative: Lam, Alvin
(86) International application number: PCT/CN2018/115827
(87) International publication number: WO 2019/184392

(57) **Abstract**

A motor for a compressor, comprising: a stator comprising a stator core (2), wherein the stator core (2) is circular tubular, and a ratio k of the inner diameter to the outer diameter of the stator core (2) satisfies k>0.5; and a rotor (4) provided in the cylindrical space enclosed by the stator core (2). The rotor (4) comprises a rotor core (42) and a magnetic member (44). The magnetic member (44) is provided on the rotor core (42). The exhaust volume V of the compressor, the mass M of the rotor core (42) and the magnetic member (44), and the maximum radius of an outer edge of the rotor (4) satisfy 2<V/(M^{∗}R²)^{∗}1000<4, wherein the unit of the exhaust volume V of the compressor is cm³, the unit of the mass M of the rotor core (42) and the magnetic member (44) is g, and the unit of the maximum radius of the outer edge of the rotor (4) is cm. The provided motor reduces speed fluctuation at the same time of ensuring motor miniaturization, effectively improves the operational stability of the compressor in the low-frequency operation process of the compressor, increases the machine efficiency of the compressor, and reduces the compressor noise.

## Description

### CROSS-REFERENCES TO RELATED APPLICATION

This application claims priority to Chinese Patent Application No. 201810273584.8, filed in the China National Intellectual Property Administration on March 29, 2018, entitled "MOTOR, COMPRESSOR, AND REFRIGERATION DEVICE", which is incorporated by reference herein in its entirety.

### FIELD

The present invention relates to the technical field of compressors, in particular to a motor, a compressor, and a refrigeration device.

### BACKGROUND

As is well known, the single-cylinder rolling rotor compressor is widely applied in the field of household appliances, such as air conditioners, due to its simple structure and high energy efficiency. However, in the prior art, the compressor operates with a pulsatile load and has a large speed fluctuation in low-frequency operation, and the small inner diameter of the rotor of the motor leads to poor resistance of the rotor against disturbance, so that the energy efficiency of the compressor is suppressed.

### SUMMARY

An object of the present invention is to solve at least one of the technical problems in the prior art or related art.

In order to achieve the object, in a first aspect of the present invention, a motor is provided.

In a second aspect of the present invention, a compressor is provided.

In a third aspect of the present invention, a refrigeration device is provided.

In view of this, according to the first aspect of the present invention, there is provided a motor for a compressor, comprising: a stator comprising a stator core in a circular tubular shape, a ratio k of the inner diameter to the outer diameter of the stator core satisfying k>0.5; and a rotor provided in a cylindrical space enclosed by the stator core and comprising a rotor core and a magnetic member provided on the rotor core, the exhaust volume V of the compressor, the mass M of the rotor core and the magnetic member, and the maximum radius R of an outer edge of the rotor satisfying 2<V/(M^{∗}R²)^{∗} 1000<4, wherein the unit of the exhaust volume V of the compressor is cm³, the unit of the mass M of the rotor core and the magnetic member is g, and the unit of the maximum radius R of the outer edge of the rotor is cm.

The motor of the present invention comprises the stator and the rotor, wherein the stator comprises the stator core, the rotor is sleeved by the stator core and is rotatable relative to the stator core, and the rotor further comprises components such as a rivet and a counterbalance. When the exhaust volume of the compressor is constant, the motor can be further minimized as the value of V/(M^{∗}R²)^{∗}1000 increases. However, in low-frequency operation of the compressor, if the value of V/(M^{∗}R²)^{∗}1000 increases, the speed fluctuation of the rotor increases, the resistance against disturbance is lowered, and the energy efficiency of the compressor drops significantly. As the moment of inertia of the rotor is proportional to the mass M of the rotor core and the magnetic member and the square of the maximum radius R of the outer edge of the rotor, the speed fluctuation can be reduced by increasing the maximum radius of the outer edge of the rotor, thereby improving the resistance of the rotor against disturbance, and increasing the energy efficiency of the compressor. Moreover, the maximum radius of the outer edge of the rotor is limited by the inner diameter of the stator core, and under the condition that the outer diameter of the stator core is fixed, the inner diameter of the stator core can be increased by optimizing the ratio k of the inner diameter to the outer diameter of the stator core, i.e. setting the value of k to be k>0.5, thereby ensuring that the maximum radius of the outer edge of the rotor is increased. Besides, to ensure the miniaturization of the motor, the exhaust volume V of the compressor, the mass M of the rotor core and the magnetic member, and the maximum radius R of the outer edge of the rotor may satisfy 2<V/(M^{∗}R²)^{∗}1000<4. Therefore, the provided motor reduces speed fluctuation and improves the resistance of the rotor against disturbance at the same time of ensuring motor miniaturization, effectively improves the operational stability of the compressor in the low-frequency operation process of the compressor, increases the machine efficiency of the compressor, and reduces the compressor noise.

In addition, the motor in the above technical solution provided by the present invention may also have the following additional technical features:
In the above technical solution, optionally, the ratio k of the inner diameter to the outer diameter of the stator core satisfies k> 0.57; and the exhaust volume V of the compressor, the mass M of the rotor core and the magnetic member, and the maximum radius R of the outer edge of the rotor satisfy 2.2<V/(M^{∗}R²)^{∗}1000<3.7.

In this technical solution, the range of the ratio k of the inner diameter to the outer diameter of the stator core and the range of V/(M^{∗}R²)^{∗} 1000 are further optimized by setting k to be k>0.57 and setting V/(M^{∗}R²)^{∗}1000 to be 2.2 <V/(M^{∗}R²)^{∗}1000<3.7. Therefore, the provided motor reduces speed fluctuation and further improves the resistance of the rotor against disturbance at the same time of ensuring motor miniaturization, effectively improves the operational stability of the compressor in the low-frequency operation process of the compressor, increases the machine efficiency of the compressor, and further reduces the compressor noise.

In any of the above technical solutions, optionally, the magnetic member is a permanent magnet.

In this technical solution, a permanent magnet rather than an electromagnet is adopted as the magnetic member, so that the magnetic member needs not to be connected to a power supply, thereby simplifying the structure.

In any of the above technical solutions, optionally, the motor is a rare earth permanent magnet synchronous motor.

In this technical solution, the rare earth permanent magnet synchronous motor has the advantages of high starting torque, high overload capacity, high operation efficiency and significant energy-saving effect, so that the energy efficiency of the compressor can be further improved.

In any of the above technical solutions, optionally, the motor is a concentrated winding motor.

In this technical solution, the motor adopts a concentrated winding motor structure, so that the use of copper for end parts of the motor is reduced, and the efficiency of a single motor can be improved. Besides, in the concentrated winding motor structure, the motor has a relatively large inner diameter, and thus the rotor can be made to have a large outer diameter, so that the operational stability of the compressor in low-frequency operation can be effectively improved.

In any of the above technical solutions, optionally, the stator core comprises a plurality of stator punched laminations stacked together and each provided with a plurality of tooth slots formed in an inner side of the stator punched lamination and uniformly distributed along the circumference of the stator punched lamination.

In this the technical solution, the stator core may be formed by a plurality of stator punched laminations stacked together, so that the stator core may be constructed into different sizes by configuring the size, thickness and quantity of the stator punched laminations, thereby meeting different user requirements, improving user experience, simplifying the manufacturing process of the stator core, and offering high flexibility for the stator core. In addition, the positions of the plurality of tooth slots formed in each stator punched lamination are identical, and the stator further comprises windings, so that the windings can be conveniently wound in the tooth slots in the inner side of the stator punched laminations stacked together.

Alternatively, the plurality of tooth slots are uniformly distributed at intervals, so that the windings can be uniformly distributed on the stator core, thereby allowing the distribution of the magnetic density of the stator to be uniform, and improving the performance of the motor.

In any of the above technical solutions, optionally, the number of the tooth slots is 9, and the number of poles of the rotor is 6; or the number of the tooth slots is 6, and the number of poles of the rotor is 4; or the number of the tooth slots is 18, and the number of poles of the rotor is 6; or the number of the tooth slots is 24, and the number of poles of the rotor is 4.

In this technical solution, the number of the tooth slots and the corresponding number of the poles of the rotor are specifically defined, and the motor having the afore-mentioned number of tooth slots and corresponding number of poles of the rotor can further improve the operation efficiency of the compressor and reduce electromagnetic noise.

In any of the above technical solutions, optionally, the rotor has a magnetic pole structure of V type or W type.

In this technical solution, the rotor has a magnetic pole structure of V type or W type, so that the area of the permanent magnet can be increased in the same space, thereby improving the performance of the motor.

In the second aspect of the present invention, there is provided a compressor comprising the motor according to any of the technical solutions described above.

The compressor provided by the invention comprises the motor in any of the technical solutions described above, and thus has all the technical effects of the motor, which will not be described in detail here.

In the above technical solution, optionally, the compressor is a single-cylinder rolling rotor compressor.

In this technical solution, the compressor further comprises: a housing and a pump having a compression chamber formed therein.

In the third aspect of the present invention, there is provided a refrigeration device comprising the motor in any of the technical solutions described above or the compressor in any of the technical solutions described above.

The refrigeration device provided by the invention comprises the motor or compressor in any of the technical solutions described above, and thus has all the technical effects of the motor or the compressor, which will not be described in detail.

In this technical solution, the refrigeration device may be an air conditioner or a refrigerator.

Additional aspects and advantages of the invention will be apparent from the following description, or may be learned by practice of the invention.

### BRIEF DESCRIPTION OF THE DRAWINGS

The above and/or additional aspects and advantages of the present invention will become apparent and readily appreciated from the following description of the embodiments taken in conjunction with the accompanying drawings, in which:
Fig. 1 shows a front view of a stator core according to an embodiment of the present invention;
Fig. 2 shows a front view of a rotor core according to an embodiment of the present invention;
Fig. 3 shows a graph illustrating the relationship of motor volume versus V/(M^{∗}R²)^{∗}1000 according to an embodiment of the present invention; and
Fig. 4 shows a graph illustrating a variation trend of the energy efficiency of a compressor according to the present invention as compared with that in related art.

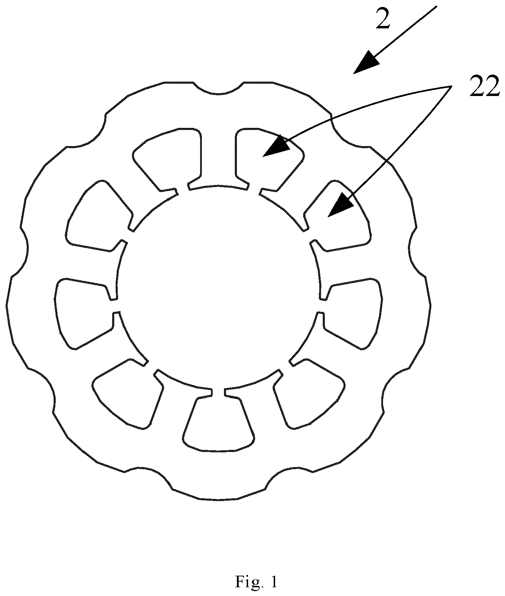

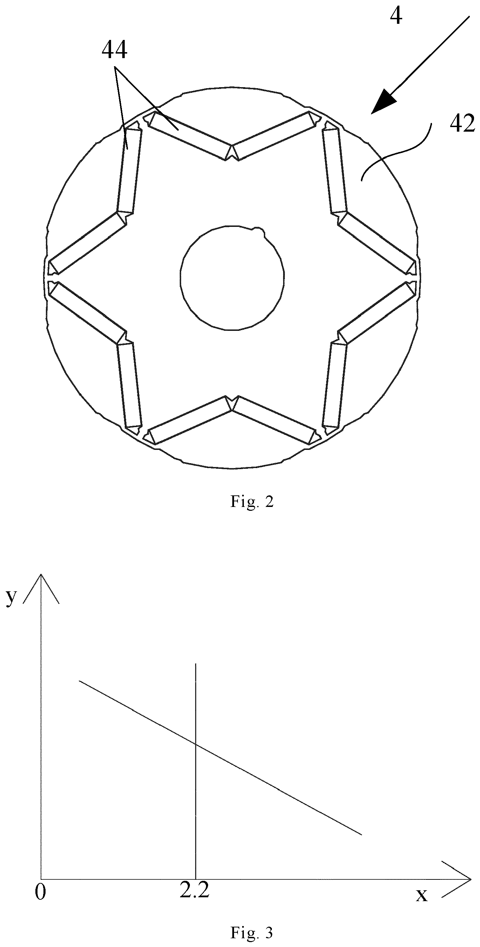

The correspondence between the reference signs and the names of the components in Figs. 1 and 2 is as follows:
2 stator core, 22 tooth slots, 4 rotor, 42 rotor core, and 44 magnetic member.

### DETAILED DESCRIPTION OF THE INVENTION

In order that the above objects, features and advantages of the present invention may be more clearly understood, the present invention will be described in further detail with reference to the accompanying drawings and particular embodiments. It should be noted that the embodiments and features in the embodiments of the present application may be combined with one another without conflicts.
In the following description, numerous specific details are set forth in order to provide a thorough understanding of the present invention, but the invention may be practiced otherwise than as described herein, and therefore, the scope of the invention is not limited to the particular embodiments disclosed below.

A motor according to some embodiments of the present invention is described below with reference to Figs. 1 to 4.

As shown in Figs. 1 and 2, an embodiment of the first aspect of the present invention provides a motor for a compressor, comprising: a stator comprising a stator core 2 in a circular tubular shape, a ratio k of the inner diameter to the outer diameter of the stator core 2 satisfying k>0.5; and a rotor 4 provided in a cylindrical space enclosed by the stator core 2 and comprising a rotor core 42 and a magnetic member 44 provided on the rotor core 42, the exhaust volume V of the compressor, the mass M of the rotor core 42 and the magnetic member 44, and the maximum radius R of an outer edge of the rotor 4 satisfying 2<V/(M^{∗}R²)^{∗}1000<4, wherein the unit of the exhaust volume V of the compressor is cm³, the unit of the mass M of the rotor core 42 and the magnetic member 44 is g, and the unit of the maximum radius R of the outer edge of the rotor 4 is cm.

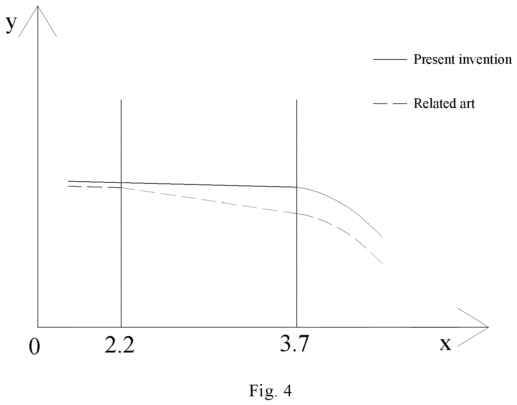

The motor of the present invention comprises the stator and the rotor 4, wherein the stator comprises the stator core 2, the rotor 4 is sleeved by the stator core 2 and is rotatable relative to the stator core 2, and the rotor 4 further comprises components such as a rivet and a counterbalance. When the exhaust volume of the compressor is constant, as shown in Fig. 3 (the x-axis corresponds to the value of V/(M^{∗}R²)^{∗} 1000 and the y-axis corresponds to the volume V of the motor), the volume of the motor decreases as the value of V/(M^{∗}R²)^{∗}1000 increases, i.e., the motor can be further minimized as the value of V/(M^{∗}R²)^{∗}1000 increases. However, in low-frequency operation of the compressor, if the value of V/(M^{∗}R²)^{∗}1000 increases, the speed fluctuation of the rotor 4 increases, the resistance against disturbance is lowered, and the energy efficiency of the compressor drops significantly. As the moment of inertia of the rotor 4 is proportional to the mass M of the rotor core 42 and the magnetic member 44 and the square of the maximum radius R of the outer edge of the rotor 4, the speed fluctuation can be reduced by increasing the maximum radius of the outer edge of the rotor 4, thereby improving the resistance of the rotor 4 against disturbance, and increasing the energy efficiency of the compressor. Moreover, the maximum radius of the outer edge of the rotor 4 is limited by the inner diameter of the stator core 2, and under the condition that the outer diameter of the stator core 2 is fixed, the inner diameter of the stator core 2 can be increased by optimizing the ratio k of the inner diameter to the outer diameter of the stator core 2, i.e. setting the value of k to be k> 0.5, thereby ensuring that the maximum radius of the outer edge of the rotor 4 is increased. Besides, to ensure the miniaturization of the motor, as shown in Fig. 4 (the x-axis corresponds to the value of V/(M^{∗}R²)^{∗}1000, the y-axis corresponds to the energy efficiency of the compressor, the solid line is an energy efficiency curve of the compressor of the present invention, and the dotted line is an energy efficiency curve of a compressor in the related art), k is set to be greater than 0.5, and the energy efficiency of the compressor is improved as compared with the related art by way of increasing the outer diameter of the rotor core. The energy efficiency of the compressor is substantially equal when the value of V/(M^{∗}R²)^{∗} 1000 is between 2 and 4, and the point, at which the value of V/(M^{∗}R²)^{∗}1000 is 4, is a critical point where the energy efficiency of the compressor drops sharply. Therefore, the exhaust volume V of the compressor, the mass M of the rotor core 42 and the magnetic member 44, and the maximum radius R of the outer edge of the rotor 4 may satisfy 2<V/(M^{∗}R²)^{∗}1000<4, wherein the unit of the exhaust volume V of the compressor is cm³, the unit of the mass M of the rotor core 42 and the magnetic member 44 is g, and the unit of the maximum radius R of the outer edge of the rotor 4 is cm. Therefore, the provided motor reduces speed fluctuation and improves the resistance of the rotor 4 against disturbance at the same time of ensuring motor miniaturization, effectively improves the operational stability of the compressor in the low-frequency operation process of the compressor, increases the machine efficiency of the compressor, and reduces the compressor noise.

As shown in Figs. 1 to 4, in an embodiment of the present invention, optionally, the ratio k of the inner diameter to the outer diameter of the stator core 2 satisfies k> 0.57; and the exhaust volume V of the compressor, the mass M of the rotor core 42 and the magnetic member 44, and the maximum radius R of the outer edge of the rotor 4 satisfy 2.2<V/(M^{∗}R²)^{∗}1000<3.7.

In this embodiment, the range of the ratio k of the inner diameter to the outer diameter of the stator core 2 is further optimized by setting k to be greater than 0.57. As shown in Fig. 3, the volume of the motor decreases as the value of V/(M^{∗}R²)^{∗}1000 increases, and when the value of V/(M^{∗}R²)^{∗} 1000 is 2.2, the volume of the motor is correspondingly reduced by about half. As shown in Fig. 4, according to the present invention, the energy efficiency of the compressor is improved as compared with the related art by way of increasing the outer diameter of the rotor core, and the energy efficiency of the compressor is substantially equal when the value of V/(M^{∗}R²)^{∗}1000 is between 2.2 and 3.7. Therefore, when the exhaust volume V of the compressor, the mass M of the rotor core 42 and the magnetic member 44, and the maximum radius R of the outer edge of the rotor 4 satisfy 2.2<V/(M^{∗}R²)^{∗}1000<3.7, wherein the unit of the exhaust volume V of the compressor is cm³, the unit of the mass M of the rotor core 42 and the magnetic member 44 is g, and the unit of the maximum radius R of the outer edge of the rotor 4 is cm, the provided motor reduces speed fluctuation and further improves the resistance of the rotor 4 against disturbance at the same time of ensuring motor miniaturization, effectively improves the operational stability of the compressor in the low-frequency operation process of the compressor, increases the machine efficiency of the compressor, and further reduces the compressor noise.
In an embodiment of the present invention, optionally, the magnetic member 44 is a permanent magnet.

In this technical solution, a permanent magnet rather than an electromagnet is adopted as the magnetic member 44, so that the magnetic member 44 needs not to be connected to a power supply, thereby simplifying the structure.

In an embodiment of the present invention, optionally, the motor is a rare earth permanent magnet synchronous motor.

In this embodiment, the rare earth permanent magnet synchronous motor has the advantages of high starting torque, high overload capacity, high operation efficiency and significant energy-saving effect, so that the energy efficiency of the compressor can be further improved.

In an embodiment of the present invention, optionally, the motor is a concentrated winding motor.

In this embodiment, the motor adopts a concentrated winding motor structure, so that the use of copper for end parts of the motor is reduced, and the efficiency of a single motor can be improved. Besides, in the concentrated winding motor structure, the motor has a large inner diameter, and thus the rotor 4 can be made to have a large outer diameter, so that the operational stability of the compressor in low-frequency operation can be effectively improved.

In an embodiment of the present invention, optionally, as shown in Fig. 1, the stator core 2 comprises a plurality of stator punched laminations stacked together and each provided with a plurality of tooth slots 22 formed in an inner side of the stator punched lamination and uniformly distributed along the circumference of the stator punched lamination.

In this embodiment, the stator core 2 may be formed by a plurality of stator punched laminations stacked together, so that the stator core 2 may be constructed into different sizes by configuring the size, thickness and quantity of the stator punched laminations, thereby meeting different user requirements, improving user experience, simplifying the manufacturing process of the stator core 2, and offering high flexibility for the stator core 2. In addition, the positions of the plurality of tooth slots 22 formed in each stator punched lamination are identical, and the stator further comprises windings, so that the windings can be conveniently wound in the tooth slots 22 in the inner side of the stator punched laminations stacked together.

Alternatively, the plurality of tooth slots 22 are uniformly distributed at intervals, so that the windings can be uniformly distributed on the stator core 2, thereby allowing the distribution of the magnetic density of the stator to be uniform, and improving the performance of the motor.

In an embodiment of the present invention, optionally, the number of the tooth slots 22 is 9, and the number of poles of the rotor 4 is 6; or the number of the tooth slots 22 is 6, and the number of poles of the rotor 4 is 4; or the number of the tooth slots 22 is 18, and the number of poles of the rotor 4 is 6; or the number of the tooth slots 22 is 24, and the number of poles of the rotor 4 is 4.

In this embodiment, the number of the tooth slots 22 and the corresponding number of the poles of the rotor 4 are specifically defined, and the motor having the afore-mentioned number of tooth slots 22 and corresponding number of poles of the rotor 4 can further improve the operation efficiency of the compressor and reduce electromagnetic noise.

Optionally, as shown in Figs. 1 and 2, the number of the tooth slots 22 is 9, and the number of the poles of the rotor 4 is 6.

In an embodiment of the present invention, optionally, the rotor 4 has a magnetic pole structure of V type or W type.

In this embodiment, the rotor has a magnetic pole structure of V type or W type, so that the area of the permanent magnet can be increased in the same space, thereby improving the performance of the motor.

Alternatively, as shown in Fig. 2, the rotor has a magnetic pole structure of V type.
An embodiment of the second aspect of the present invention provides a compressor comprising the motor of any of the embodiments described above.

The compressor provided by the invention comprises the motor in any of the embodiments described above, and thus has all the technical effects of the motor, which will not be described in detail here.

In an embodiment of the present invention, optionally, the compressor is a single-cylinder rolling rotor compressor.

In this embodiment, the compressor further comprises: a housing and a pump having a compression chamber formed therein.

An embodiment of the third aspect of the present invention provides a refrigeration device comprising the motor in any of the embodiments described above or the compressor in any of the embodiments described above.

The refrigeration device provided by the invention comprises the motor or compressor in any of the embodiments described above, and thus has all the technical effects of the motor or the compressor, which will not be described in detail.

In this embodiment, the refrigeration device may be an air conditioner or a refrigerator.

In the present invention, the term "plurality of" refers to two or more, unless explicitly defined otherwise. The terms "mounted" , "interconnected" , "connected" , "fixed", and the like are to be construed broadly, e.g., "connected" may be fixedly connected, or may be detachably connected, or integrally connected; and "interconnected" may be interconnected directly or indirectly through an intermediary. The specific meaning of the above terms in present invention will be appreciated by those of ordinary skill in the art, as the case may be.

In this description, the description of the terms "one embodiment", "some embodiments", "particular embodiments", etc., means that particular features, structures, materials, or characteristics described in connection with the embodiment or example is included in at least one embodiment or example of the present application. In this description, the schematic representation of the above terms does not necessarily refer to the same embodiment or example. Furthermore, the particular features, structures, materials, or characteristics described may be combined in any suitable manner in any one or more embodiments or examples.

The foregoing is merely a preferred embodiment of the invention and is not intended to limit the invention, as various modifications and changes therein will occur to those skilled in the art. Any modifications, equivalents, improvements, etc. that come within the spirit and principles of this application are intended to be included within the scope of this application.

## Claims

1. A motor for a compressor, comprising:
a stator comprising a stator core in a circular tubular shape, a ratio k of an inner diameter to an outer diameter of the stator core satisfying k>0.5; and
a rotor provided in a cylindrical space enclosed by the stator core and comprising a rotor core and a magnetic member provided on the rotor core, the exhaust volume V of the compressor, the mass M of the rotor core and the magnetic member, and the maximum radius R of an outer edge of the rotor satisfying 2<V/(M^{∗}R²)^{∗}1000<4, wherein the unit of the exhaust volume V of the compressor is cm³, the unit of the mass M of the rotor core and the magnetic member is g, and the unit of the maximum radius R of the outer edge of the rotor is cm.

2. The motor according to claim 1, wherein
the ratio k of the inner diameter to the outer diameter of the stator core satisfies k> 0.57; and
the exhaust volume V of the compressor, the mass M of the rotor core and the magnetic member, and the maximum radius R of the outer edge of the rotor satisfy 2.2<V/(M^{∗}R²)^{∗}1000<3.7.

3. The motor according to claim 1 or 2, wherein
the magnetic member is a permanent magnet.

4. The motor according to claim 3, wherein
the motor is a rare earth permanent magnet synchronous motor.

5. The motor according to claim 1 or 2, wherein
the motor is a concentrated winding motor.

6. The motor according to claim 1 or 2, wherein
the stator core comprises a plurality of stator punched laminations stacked together and each provided with a plurality of tooth slots formed in an inner side of the stator punched laminations and uniformly distributed along a circumference of the stator punched laminations.

7. The motor according to claim 6, wherein
the number of the tooth slots is 9, and the number of poles of the rotor is 6; or
the number of the tooth slots is 6, and the number of poles of the rotor is 4; or
the number of the tooth slots is 18, and the number of poles of the rotor is 6; or
the number of the tooth slots is 24, and the number of poles of the rotor is 4.

8. The motor according to claim 1 or 2, wherein
the rotor has a magnetic pole structure of V type or W type.

9. A compressor, comprising:
the motor according to any one of claims 1 to 8.

10. The compressor according to claim 9, wherein
the compressor is a single-cylinder rolling rotor compressor.

11. A refrigeration device, comprising:
the motor according to any one of claims 1 to 8; or
the compressor according to claim 9 or 10.
